# EUROPÄISCHE PATENTSCHRIFT

(11) **EP 3 178 644 B1**
(45) Veröffentlichungstag und Bekanntmachung des Hinweises auf die Patenterteilung: **04.05.2022**
(21) Anmeldenummer: 16197449.8
(22) Anmeldetag: 07.11.2016
(51) Int. Cl.: B32B 5/16, B32B 7/04, B32B 7/08, B32B 27/08, B32B 27/28, B32B 27/32, B32B 1/08, B32B 3/06, B32B 3/30

(54) **MEHRKOMPONENTEN-KUNSTSTOFFKÖRPER**
MULTI-COMPONENT PLASTIC BODY
ÉLÉMENT EN PLASTIQUE À PLUSIEURS COMPOSANTS

(30) Priorität: 13.11.2015 DE 102015222396
(43) Veröffentlichungstag der Anmeldung: 14.06.2017
(73) Patentinhaber: RAUMEDIC AG, 95213 Münchberg (DE)
(72) Erfinder: JORDAN, Philipp, 95447 Bayreuth (DE); HAGER, Steffen, 95233 Helmbrechts (DE); ERHARD, Dominik, 95326 Kulmbach (DE); ADELUNG, Rainer, 24147 Kiel (DE); MEß, Kristin, 24119 Kronshagen (DE); PAULOWICZ, Ingo, 24114 Kiel (DE); SCHÜTT, Fabian, 24118 Kiel (DE)
(74) Vertreter: Rau, Schneck & Hübner Patentanwälte Rechtsanwälte PartGmbB

(56) Entgegenhaltungen:
- WO-A2-2015/010687
- US-A- 3 126 311
- XIN JIN ET AL: "Joining the Un-Joinable: Adhesion Between Low Surface Energy Polymers Using Tetrapodal ZnO Linkers", ADVANCED MATERIALS, Bd. 24, Nr. 42, 8. November 2012 (2012-11-08), Seiten 5676-5680, XP055324022, DE ISSN: 0935-9648, DOI: 10.1002/adma.201201780
- Anonymous: ""Stapling" of Non-Sticky Polymers Creates Strong Bond", Polymer Solutions , 24. September 2012 (2012-09-24), XP002768831, Gefunden im Internet: URL:https://www.polymersolutions.com/blog/ stapling-of-non-sticky-polymers-creates-st rong-bond/ [gefunden am 2017-04-04]
- DODSON B.: "Bringing Teflon and silicone together shows promise for medical applications", New Atlas , 26. August 2012 (2012-08-26), XP002768832, Gefunden im Internet: URL:http://newatlas.com/teflon-silicone-bi nding/23872/ [gefunden am 2017-04-04]

## Beschreibung

Die vorliegende Patentanmeldung nimmt die Priorität der deutschen Patentanmeldung DE 10 2015 222 396.5 in Anspruch.

Die Erfindung betrifft einen Mehrkomponenten-Kunststoffkörper mit mindestens einer Silikon-Komponente und einer weiteren Polymer-Komponente.

Derartige Mehrkomponenten-Kunststoffkörper sind bekannt aus dem Fachartikel von Jin et al., Adv. Mater. 2012, 24, 5676 bis 5680, aus der DE 10 2008 009 171 B4, der DE 10 2010 039 085 A1, der DE 10 2007 044 789 A1. Am 04.04.2017 war im Internet abrufbar ein Artikel " "Stapling" of Non-Sticky Polymers Creates Strong Bond", dort datiert auf den 24.09.2012 (https://www.polymersolutions.com/blog/stapling-of-non-sticky-polymers-creates-strong-bond/). Ebenfalls am 04.04.2017 abrufbar war ein Artikel "Bringing Teflon and silicone together shows promise for medical applications", dort datiert auf den 26.08.2012 (http://newatlas.com/ teflon-silicone-binding/23872/). Die US 3,126,311 offenbart einen laminierten Plastikartikel mit mehreren miteinander über aufgeschmolzene Kunststoffpartikel verzahnten Schichten. Die WO 2015/010687 A2 beschreibt ein Polymerlaminat und ein Verfahren zu seiner Herstellung.

Aus der US 3,126,311 ist ein Haftverbund aus einer Polymer-Komponente und einer weiteren Komponente beschrieben, bei der es sich um Silikon handeln kann. Die US 2004/0229043 A1 beschreibt die Herstellung einer Mehrlagen-Verbindung. Aus der US 2010/0310805 A1 und der WO 2008/109 865 A2 ist die Herstellung von Komponenten aus Silikon-Zusammensetzungen bekannt. Die WO 2015/010687 A2 beschreibt ein Polymerlaminat und ein Verfahren zu dessen Herstellung.

Es ist eine Aufgabe der vorliegenden Erfindung, einen Mehrkomponenten-Kunststoffkörper zu schaffen, bei dem eine sichere Verbindung zwischen mindestens einer Silikon-Komponente und mindestens einer weiteren Polymer-Komponente aus einem weiteren unpolaren Polymer gewährleistet ist.

Diese Aufgabe ist erfindungsgemäß gelöst durch einen Mehrkomponenten-Kunststoffkörper mit den im Anspruch 1 angegebenen Merkmalen.

Erfindungsgemäß wurde erkannt, dass eine Verbindung zwischen der Silikon-Komponente und der weiteren Polymer-Komponente über mechanisch die Komponenten verbindende Haftvermittlungskörper möglich ist. Die weitere Polymer-Komponente kann ein Polyolefin aufweisen. Eine Verbindungswirkung dieser mechanisch verbindenden Haftvermittlungskörper beruht nicht im Wesentlichen auf Adhäsion, sondern aufgrund von Formschlussbeiträgen und beruht insbesondere auf einer mechanischen Verankerung bzw. Verkrallung. Hierdurch ist eine sichere Verbindung zwischen der Silikon-Komponente und der mindestens einen weiteren Polymer-Komponente möglich, ohne dass sekundäre Bindungskräfte, wie Dipol-Dipol-Kräfte oder Wasserstoffbrücken, zum Einsatz kommen müssen. Die Haftvermittlungskörper können direkt mit mit der mindestens einen Silikon-Komponente einerseits und mit der mindestens einen weiteren Polymer-Komponente andererseits mechanisch in Kontakt kommen. Alternativ ist es möglich, dass zumindest einige oder alle Haftvermittlungskörper von einer der Komponenten des Mehrkomponenten-Kunststoffkörpers vollständig umschlossen werden, wobei sich eine mechanische Verbindung der beiden Komponenten über einen Formschlussbeitrag zwischen dem von der einen Komponente umhüllten Haftvermittlungskörper und der anderen Komponente im Grenzbereich zwischen den beiden Komponenten aufgrund der Form des Haftvermittlungskörpers ergibt. Eine mechanische Verbindung im Sinne der Anmeldung liegt insbesondere dann vor, wenn ein Formschlussbeitrag, der für einen Zusammenhalt zwischen den Komponenten des Mehrkomponenten-Kunststoffkörpers sorgt, aufgrund von Hinterschnitten der Haftvermittlungskörper resultiert. Eine unerwünschte Delamination ist wirkungsvoll verhindert. Der Kreis der Materialien für die weitere Polymer-Komponente, bei der es sich gerade nicht um eine Silikon-Komponente handelt, ist somit deutlich erweitert, nämlich auf unpolare Polymere. Gänzlich neue Kunststoffmaterialklassen werden damit zur Verbindung mit einer Silikon-Komponente zugänglich. Der Mehrkomponenten-Kunststoffkörper kann in der Medizintechnik oder in der Pharmazie zum Einsatz kommen. Bei dem Mehrkomponenten-Kunststoffkörper kann es sich um einen Mehrschichtschlauch handeln. Der Mehrkomponenten-Kunststoffkörper kann aus zwei Komponenten, aus drei Komponenten, aus vier Komponenten oder auch aus einer noch größeren Anzahl von Komponenten aufgebaut sein. Die mechanische Verbindung ermöglicht eine Restbeweglichkeit der beiden über den Haftvermittler miteinander verbundenen Komponenten zueinander, was für bestimmte Anwendungen, z. B. beim Einsatz des Mehrkomponenten-Kunststoffkörpers als Pumpschlauch, von Vorteil ist. Der Mehrkomponenten-Kunststoffkörper kann als Bauteil mit einem Dichtelement oder als Ventil-Bauteil zum Einsatz kommen. Dabei kann ein Silikon-Dichtelement direkt an eine umgebende weitere Polymer-Komponente angespritzt werden. Die weitere Polymer-Komponente kann hinsichtlich bestimmter Anforderungen optimiert sein, die bei ausschließlicher Verwendung eines Silikon-Materials nicht zugänglich sind, beispielsweise hinsichtlich hydrophober Eigenschaften oder hinsichtlich Gaspermeabilität. Die Haftvermittlungskörper können die Form von Tetrapoden haben. Die Haftvermittlungskörper können aus Zinkoxid (ZnO) gefertigt sein. Die Haftvermittlungskörper können eine typische Abmessung im Bereich zwischen 1 µm und 100 µm, insbesondere im Bereich zwischen 10 µm und 40 µm aufweisen.

Die Silikon-Komponente kann dort zum Einsatz kommen, wo es besonders auf Bioverträglichkeit ankommt, beispielsweise bei einer Fluidführung, oder dort, wo der Mehrkomponenten-Kunststoffkörper mit Gewebe in Kontakt kommt. Die Komponente aus dem weiteren Polymer kann hinsichtlich ihrer Funktion zum Erfüllen weiterer Anforderungen ausgewählt werden, beispielsweise zur Versteifung des Mehrkomponenten-Kunststoffkörpers. Die weitere Polymer-Komponente kann beispielsweise auch zum gezielten Einfärben des Mehrkomponenten-Kunststoffkörpers genutzt werden. Die weitere Polymer-Komponente kann auch eine Funktionsbarriere, wie z. B. eine Gasbarriere, bilden. Die weitere Polymer-Komponente weist mindestens einen Thermoplasten auf. Die weitere Polymer-Komponente weist mindestens eines der folgenden Polymere Polypropylen oder Polyethylen auf. Diese Materialauswahlen haben sich je nach Anwendung als besonders vorteilhaft herausgestellt.

Der Mehrkomponenten-Kunststoffkörper kann auch so gestaltet werden, dass gewünschte mechanische Eigenschaften der Silikon-Komponente genutzt werden, wohingegen eine unerwünschte Wechselwirkung der Silikon-Komponente mit einem Kontaktmedium, beispielsweise einem Arzneimittel, verhindert wird, indem dieses Medium ausschließlich mit der weiteren Polymer-Komponente in Kontakt kommt.

Die Mehrschichtschlauch-Ausführung erlaubt vielfältige Anwendungsmöglichkeiten, beispielsweise als Katheterschlauch oder als Fluidführungsschlauch. Die Silikon-Schlauchschicht kann eine innere Schlauchschicht und/oder eine äußere Schlauchschicht des Mehrschichtschlauchs sein. Eine äußere Schlauchschicht des Mehrschichtschlauchs kann aus UV-vernetzendem Silikon gebildet sein. Ein thermisches Vernetzen einer solchen Schlauchschicht ist dann nicht erforderlich. Dies vermeidet eine unerwünschte Degradation sonstiger Schlauchschichten. Die Polymer-Schlauchschicht aus dem weiteren Polymer kann vor dem Aufbringen einer äußeren Silikon-Schicht z. B. durch eine Korona- oder Plasmabehandlung funktionalisiert werden. Hierdurch kann eine Anhaftung der äußeren Silikon-Schlauchschicht verbessert werden.

Der Mehrschichtschlauch kann nach Anspruch 2 als Zweischichtschlauch ausgeführt sein. Alternativ kann der Mehrschichtschlauch als Dreischichtschlauch oder als Vierschichtschlauch ausgeführt sein. Auch eine noch größere Anzahl von Schlauchschichten ist möglich. Falls mehr als zwei Schlauchschichten zum Einsatz kommen, kann der Haftvermittler ausschließlich zwischen zwei dieser Schlauchschichten vorhanden sein. Alternativ können auch mehrere Haftvermittlerschichten jeweils zwischen zwei Schlauchschichten eines solchen, mehr als zwei Schlauchschichten aufweisenden Mehrschichtschlauchs vorhanden sein.

Eine weitere Aufgabe der Erfindung ist es, ein Herstellungsverfahren für einen solchen Mehrkomponenten-Kunststoffkörper anzugeben.

Diese Aufgabe ist erfindungsgemäß gelöst durch ein Verfahren mit den im Anspruch 3 angegebenen Merkmalen.

Die Vorteile des erfindungsgemäßen Verfahrens entsprechen denen, die vorstehend unter Bezugnahme auf den erfindungsgemäßen Mehrkomponenten-Kunststoffkörper bereits erläutert wurden. Das Verfahren kann für eine Massenherstellung automatisiert werden.

Ein Verfahren nach Anspruch 4 erlaubt ein gleichmäßiges und definiertes Aufbringen der Haftvermittlungskörper auf die Basis-Komponente. Auch ein solches Verfahren kann zur Massenherstellung automatisiert werden.

Ein Silikonfluid nach Anspruch 5 ist zum Dispergieren der Haftvermittlungskörpe besonders gut geeignet. Dieses Herstellungsverfahren, bei dem Silikonfluid zum Einsatz kommt, kann auch zur Herstellung eines Mehrkomponenten-Kunststoffkörpers zum Einsatz kommen, der als weitere Polymer-Komponente kein thermoplastisches Elastomer aufweist.

Ein Silikatisieren nach Anspruch 6 führt zu einer besonders guten Haftwirkung der Haftvermittlungskörper. Dieses Herstellungsverfahren einschließlich des Silikatisierens kann auch zur Herstellung eines Mehrkomponenten-Kunststoffkörpers zum Einsatz kommen, der als weitere Polymer-Komponente kein thermoplastisches Elastomer aufweist.

Ein Heizen nach Anspruch 7 ermöglicht eine bessere Verankerung der Haftvermittlungskörper.

Eine Extrusion nach den Ansprüchen 8 der 9 erlaubt eine besonders kostengünstige Herstellung des Mehrkomponenten-Kunststoffkörpers. Alternativ zu einer Extrusion kann zumindest eine der Komponenten des Mehrkomponenten-Kunststoffkörpers durch Spritzguss hergestellt werden. Auch der gesamte Mehrkomponenten-Kunststoffkörper kann durch entsprechenden Zwei- oder Multikomponenten-Spritzguss hergestellt werden. Ausführungsbeispiele der Erfindung werden nachfolgend anhand der Zeichnung näher erläutert. In dieser zeigen:
- Fig. 1: schematisch einen Mehrkomponenten-Kunststoffkörper mit einer Silikonschicht und einer Polymerschicht aus einem weiteren unpolaren Polymer und einem Haftvermittler zwischen diesen beiden Schichten;
- Fig. 2: eine Ausschnittsvergrößerung II aus Fig. 1, die Details des die beiden Schichten mechanisch verbindenden Haftvermittlers zeigt;
- Fig. 3 bis 6: schematische Querschnitte eines Schichtaufbaus verschiedener Ausführungen von Mehrkomponenten-Kunststoffkörpern, die jeweils als Mehrschichtschläuche ausgeführt sind;
- Fig. 7: eine Seitenansicht einer Abfüllnadel zur Verwendung in einem Schlauchset zum Abfüllen eines Mediums, insbesondere eines fließfähigen Pharmazeutikums;
- Fig. 8: einen Querschnitt gemäß Linie VIII-VIII in Fig. 7; und
- Fig. 9 bis 11: Ausführungen der Abfüllnadel nach Fig. 7 mit verschiedenen Varianten einer fluiddichten Verbindung einer Konnektorseite der Abfüllnadel mit verschiedenen Ausführungen einer Konnektorkomponente zu einer Fülleinrichtung des Schlauchsets.

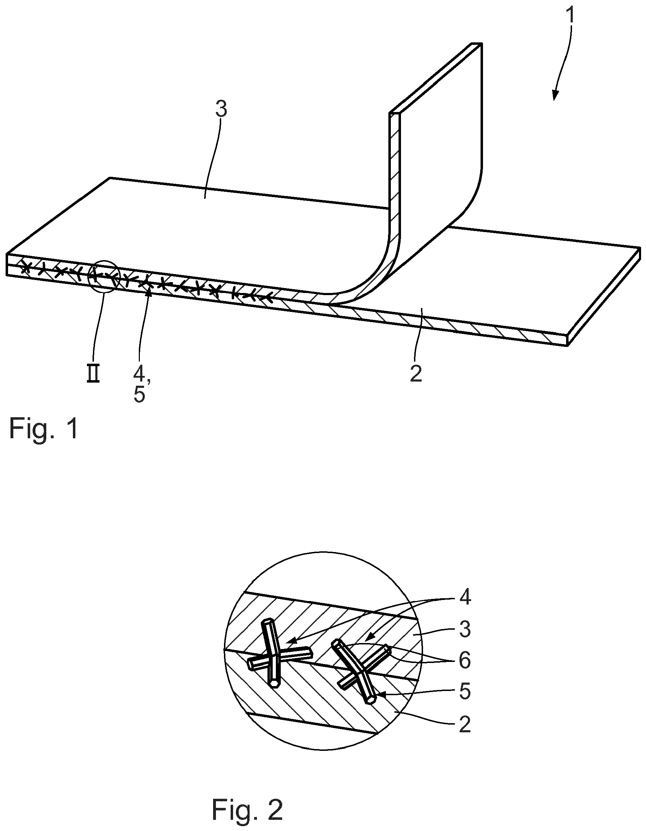

Fig. 1 zeigt eine Ausführung eines Mehrkomponenten-Kunststoffkörpers 1 am Beispiel eines Zweischicht-Kunststoffkörpers. Der Kunststoffkörper 1 hat eine Silikon-Komponente in Form einer Silikonschicht 2 und eine weitere Polymer-Komponente in Form einer Polymerschicht 3. Diese weitere Polymerschicht 3 ist aus einem unpolaren Polymer. Die weitere Polymerschicht 3 ist nicht aus Silikon. Bei dem weiteren Polymer der Polymerschicht 3 handelt es sich um Polyethylen oder Polypropylen, insbesondere um Low Density Polyethylen (LDPE) . Die weitere Polymer-Komponente 3 besteht aus einem Thermoplasten, insbesondere aus einem thermoplastischen Elastomer .

Bei dem weiteren Polymer kann es sich um ein unpolares Polyolefin handeln.

Beispiele für unpolare Polymere sind Polyethylen (PE), Polypropylen (PP), Polystyrol (PS) oder Polytetrafluorethylen (PTFE). Beispiele für wenig polare Polymere, die im Sinne dieser Anmeldung ebenfalls noch als unpolare Polymer zu verstehen sind, sind Copolymerisate aus Ethylen und ungesättigten Estern (z. B. EVAC) oder Polyphenylenether (PPE).

Der Mehrkomponenten-Kunststoffkörper 1 kann in der Medizin oder in der Pharmazie zur Anwendung kommen.

Zwischen der Silikon-Komponente 2 und der weiteren Polymer-Komponente 3 ist ein Haftvermittler 4 angeordnet. Der Haftvermittler 4 weist die beiden Komponenten 2, 3, also die beiden Schichten, mechanisch miteinander verbindende Haftvermittlungskörper 5 auf. Die Haftvermittlungskörper 5 sind aus Zinkoxid (ZnO). Die Haftvermittlungskörper 5 haben die Form von Tetrapoden. Die ZnO-Tetrapoden haben eine typische Abmessung im Bereich zwischen 1 µm und 100 µm, insbesondere im Bereich zwischen 10 µm und 40 µm. Freie Enden 6 der Haftvermittlungskörper 5 verankern bzw. verkrallen sich einerseits in bzw. mit der Silikonschicht 2 und andererseits in bzw. mit der weiteren Polymerschicht 3. Auf diese Weise ergibt sich eine mechanische Verbindung zwischen den beiden Schichten 2, 3, also zwischen der Silikonschicht 2 und der weiteren Polymerschicht 3. Diese mechanische Verbindung hat einen Formschlussbeitrag, beruht also nicht im Wesentlichen auf Adhäsion. Ein Adhäsionsbeitrag dieser Verbindung ist nicht ausgeschlossen.

Bei der in der Ausschnittvergrößerung der Fig. 2 gezeigten Anordnung stehen die Haftvermittlungskörper 5 direkt in Kontakt einerseits mit der Silikonschicht 2 und andererseits mit der weiteren Polymerschicht 3. Alternativ ist es möglich, dass jedenfalls einige oder alle der Haftvermittlungskörper 5 von einer der beiden Komponenten, also entweder der Silikonschicht 2 oder der weiteren Polymerschicht 3, vollständig umhüllt werden, wobei eine mechanische Verbindung zwischen den beiden Schichten 2, 3 dann immer noch aufgrund eines Formschlussbeitrages, erzeugt über die Form der Haftvermittlungskörper, insbesondere über mindestens einen Hinterschnitt resultiert. Beispielsweise können die Haftvermittlungskörper 5 im Bereich eines Endes 6 oder mehrerer Enden 6, die in die Polymerschicht 3 hineinragen, mit dem Silikonmaterial der Silikonschicht 2 überzogen sein.

Zur Herstellung des Mehrkomponenten-Kunststoffkörpers 1 wird zunächst eine Basis-Komponente hergestellt, bei der es sich entweder um die Silikon-Komponente 2 oder um die weitere Polymer-Komponente 3 handelt. Anschließend wird der Haftvermittler 4 auf diese Basis-Komponente 2 oder 3 aufgebracht. Schließlich wird eine Deck-Komponente, bei der es sich dann um die weitere Polymer-Komponente oder um die Silikon-Komponente handeln kann, auf die Basis-Komponente aufgebracht, so dass der Haftvermittler 4 zwischen der Silikon-Komponente 2 und der weiteren Polymer-Komponente 3 zu liegen kommt.

Vor dem Aufbringen des Haftvermittlers 4 auf die Basis-Komponente können die Haftvermittlungskörper 5 des Haftvermittlers 4 in einem Fluid, insbesondere in einem Silikonfluid, dispergiert werden. Anschließend werden die dispergierten Haftvermittlungskörpers 5 auf die Basis-Komponente aufgebracht, bevor wiederum die Deck-Komponente aufgebracht wird.

Vor dem Aufbringen des Haftvermittlers 4 kann ein Silikatisieren einer dem Haftvermittler 4 zugewandten Oberfläche der Basis-Komponente, also beispielsweise der Silikon-Komponente 2, stattfinden.

Nach dem Aufbringen der Deck-Komponente kann ein Heizen eines so erzeugten Roh-Mehrkomponenten-Kunststoffkörpers erfolgen, wodurch insbesondere die Haftvermittlungskörper 5 besser in den Schichten 2, 3 verankert werden. Nach dem Heizen dieses Roh-Mehrkomponenten-Kunststoffkörpers und dem nachfolgenden Abkühlen entsteht dann der fertige Mehrkomponenten-Kunststoffkörper 1.

Die Silikon-Komponente 2 bzw. die weitere Polymer-Komponente 3 können durch Spritzguss hergestellt werden.

Sofern es sich bei dem Mehrkomponenten-Kunststoffkörper um einen Mehrschichtschlauch handelt, was nachfolgend noch erläutert wird, können die Silikon- bzw. Polymer-Komponenten auch durch Extrusion hergestellt bzw. aufgebracht werden.

Zur Aufbringung einer Haftvermittler-Dispersion kann die jeweils vorgefertigte innere Schlauchschicht durch die Haftvermittler-Dispersion hindurchgeführt werden.

Ein Ummanteln der mit dem Haftvermittler beschichteten inneren Schlauchschicht kann mit Hilfe eines Querspritzkopfes erfolgen.

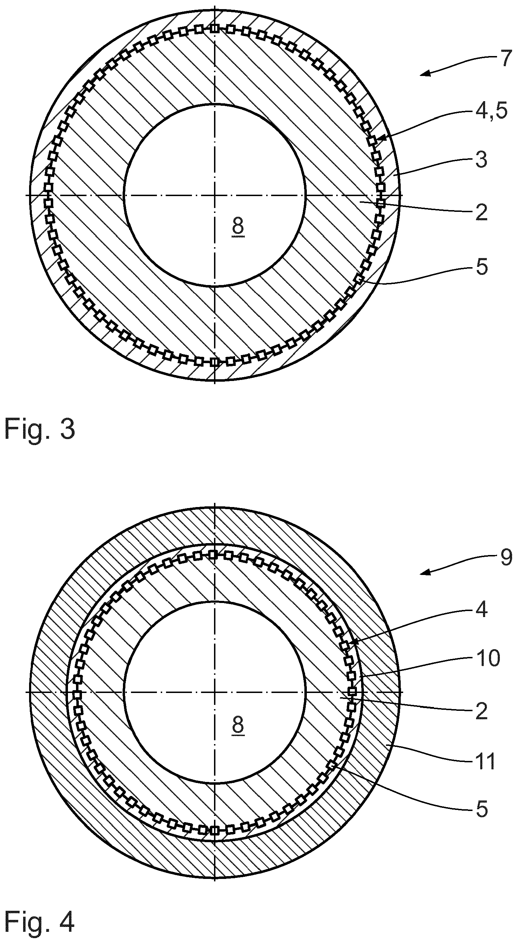

Fig. 3 zeigt eine Ausführung eines Mehrkomponenten-Kunststoffkörpers als Mehrschichtschlauch 7. Die Silikon-Komponente 2 bildet dabei eine Silikon-Schlauchschicht und die weitere Polymer-Komponente 3 eine Polymer-Schlauchschicht. Bei der Ausführung nach Fig. 3 ist die Silikon-Schlauchschicht 2 eine innere Schlauchschicht des Mehrschichtschlauchs 7, die ein Lumen 8 des Mehrschichtschlauchs 7 begrenzt. Die Silikon-Schlauchschicht 3 hat eine Härte von Shore 60 A.

Beim Silikonmaterial der Silikon-Schlauchschicht 3 kann es sich um ein platinvernetztes oder um ein peroxidvernetztes Silikon handeln.

Die Polymer-Schlauchschicht 3 des Mehrschichtschlauchs 7 aus dem weiteren unpolaren Polymer ist eine die Silikon-Schlauchschicht 2 umgebende äußere Schlauchschicht. Zwischen den beiden Schlauchschichten 2, 3 des Mehrschichtschlauchs 7 ist wiederum der Haftvermittler 4 mit den Tetrapoden-Haftvermittlungskörpern 5 angeordnet. Die Schichtstärke der inneren Silikon-Schlauchschicht 2 ist größer als diejenige der äußeren Polymer-Schlauchschicht 3.

Der Mehrschichtschlauch 7 kann als pharmazeutischer Abfüllschlauch zum Einsatz kommen. Die weitere Polymer-Schlauchschicht 3 des Mehrschichtschlauchs 7 kann eingefärbt sein. Die äußere Polymer-Schlauchschicht 3 kann komplett lichtundurchlässig oder kann mit einem im UV-Bereich absorbierenden Farbstoff eingefärbt sein. Der Mehrschichtschlauch 7 kann insgesamt transluzent ausgeführt sein, so dass eine optische Kontrolle des Lumens 8 möglich bleibt.

Die innere Silikon-Schlauchschicht 2 kann aus einem platinvernetzendem Silikonkautschuk gebildet sein. Die innere Silikon-Schlauchschicht 2 kann eine silikatisierte Oberfläche aufweisen.

Anhand der Fig. 4 wird nachfolgend eine weitere Ausführung eines Mehrschichtschlauchs 9 erläutert. Komponenten und Funktionen, die denjenigen entsprechen, die vorstehend unter Bezugnahme auf die Fig. 1 bis 3 bereits erläutert wurden, tragen die gleichen Bezugsziffern und Bezeichnungen und werden nicht nochmals im Einzelnen diskutiert.

Der Mehrschichtschlauch 9 umfasst eine innerste Silikonschicht 2, die von einer Zwischen-Schlauchschicht 10 aus einem weiteren Polymer umgeben ist. Die Zwischen-Schlauchschicht 10 stellt die weitere Polymer-Komponente des Mehrschichtschlauchs 9 dar. Zwischen der Zwischen-Schlauchschicht 10 und der innersten Silikon-Schlauchschicht 2 ist der Haftvermittler 4 mit den Haftvermittlungskörpern 5 angeordnet. Die Zwischen-Schlauchschicht 10 ist umgeben von einer äußeren Schlauchschicht 11, die wiederum als Silikon-Schlauchschicht ausgeführt ist. Bei der äußeren Silikon-Schlauchschicht 11 handelt es sich um eine Schlauchschicht aus UV-vernetzendem Silikon. Ein thermischer Vernetzungsschritt für die äußere Silikon-Schlauchschicht 11 ist dann nicht erforderlich. Vor dem Aufbringen der äußeren Silikon-Schlauchschicht 11 kann die Zwischen-Schlauchschicht 10 bei der Herstellung des Mehrschichtschlauchs 9 zur Verbesserung der Anhaftung der äußeren Silikon-Schlauchschicht 11 funktionalisiert werden. Diese Funktionalisierung der Zwischen-Schlauchschicht 10 kann durch eine Korona- oder durch eine Plasmabehandlung erfolgen. Die Zwischen-Schlauchschicht 10 hat eine Schichtstärke, die kleiner ist als die Schichtstärken der Silikon-Schlauchschichten 2 und 11 des Mehrschichtschlauchs 9.

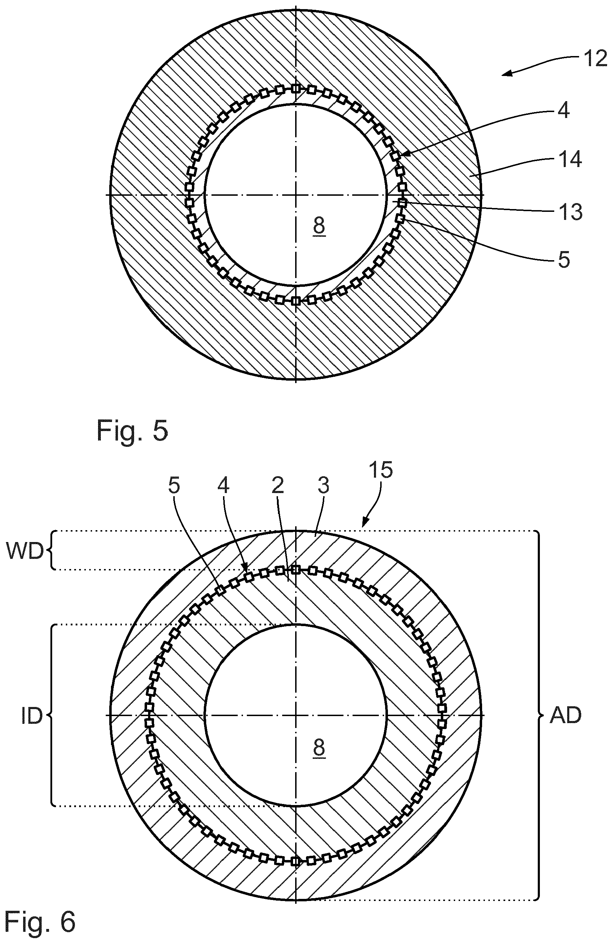

Anhand der Fig. 5 wird nachfolgend eine weitere Ausführung eines Mehrschichtschlauchs 12 erläutert. Komponenten und Funktionen, die denjenigen entsprechen, die vorstehend unter Bezugnahme auf die Fig. 1 bis 4 bereits erläutert wurden, tragen die gleichen Bezugsziffern und Bezeichnungen und werden nicht nochmals im Einzelnen diskutiert.

Beim Mehrschichtschlauch 12 ist eine innerste Schlauchschicht 13 als die weitere Polymer-Komponente ausgeführt. Diese ist umgeben vom Haftvermittler 4 mit den Haftvermittlungskörpern 5 und weiterhin von einer äußeren Schlauchschicht 14, die die Silikon-Komponente des MehrschichtSchlauchs 12 darstellt. Auch bei der äußeren Silikon-Schlauchschicht 14 handelt es sich um eine Schicht aus UV-vernetzendem Silikon. Die Schichtstärke der inneren Polymer-Schlauchschicht 13 ist kleiner als diejenige der äußeren Silikon-Schlauchschicht 14.

Bei der Extrusion der Mehrschichtschläuche 7, 9 und 12 wird zunächst die innerste Schlauchschicht 2, 13 extrudiert und anschließend eine Haftvermittler-Dispersion mit den Haftvermittlungskörpern 5 aufgebracht, woraufhin dann die äußere Schlauchschicht 3, 14 oder die Zwischen-Schlauchschicht 11 per Extrusion aufgebracht wird. Beim Dreischichtschlauch 9 nach Fig. 4 wird im Anschluss hieran die äußere Silikon-Schlauchschicht 11 aufgebracht.

Die Mehrschichtschläuche 9 und 12 können beispielsweise als geruchsdichte Rektalkatheter zum Einsatz kommen.

Aufgrund der Tatsache, dass die Polymer-Schlauchschicht 10 bzw. 13 der Mehrschichtschläuche 9 bzw. 12 weniger stark ist als die beteiligten Silikon-Schlauchschichten 3, 11 bzw. 14 ergibt sich eine gute Flexibilität des jeweiligen Mehrschichtschlauchs 9, 12.

Die Mehrschichtschläuche 9 und 12 sind insgesamt transluzent. Eine optische Kontrolle des Lumens 8 von außen ist möglich.

Die Mehrschichtschläuche 9 und 12 können auch als Pumpschläuche, insbesondere für eine peristaltische Pumpe, zum Einsatz kommen.

Fig. 6 zeigt eine weitere Ausführung eines Mehrschichtschlauchs 15. Komponenten und Funktionen, die denjenigen entsprechen, die vorstehend unter Bezugnahme auf die Fig. 1 bis 5 bereits erläutert wurden, tragen die gleichen Bezugsziffern und Bezeichnungen und werden nicht nochmals im Einzelnen diskutiert.

Der Mehrschichtschlauch 15 entspricht von seinem grundsätzlichen Aufbau dem Mehrschichtschlauch 7 nach Fig. 3. Unterschiede bestehen hauptsächlich bei den Durchmesserverhältnissen. Der Mehrschichtschlauch 15 hat einen Außendurchmesser AD von 5 mm. Ein Innendurchmesser ID beträgt 1,2 mm. Die Wandstärke der äußeren Polymer-Schlauchschicht, WD, beträgt 0,7 mm. Entsprechend beträgt die Wanddicke der inneren Silikon-Schlauchschicht 2 1,2 mm.

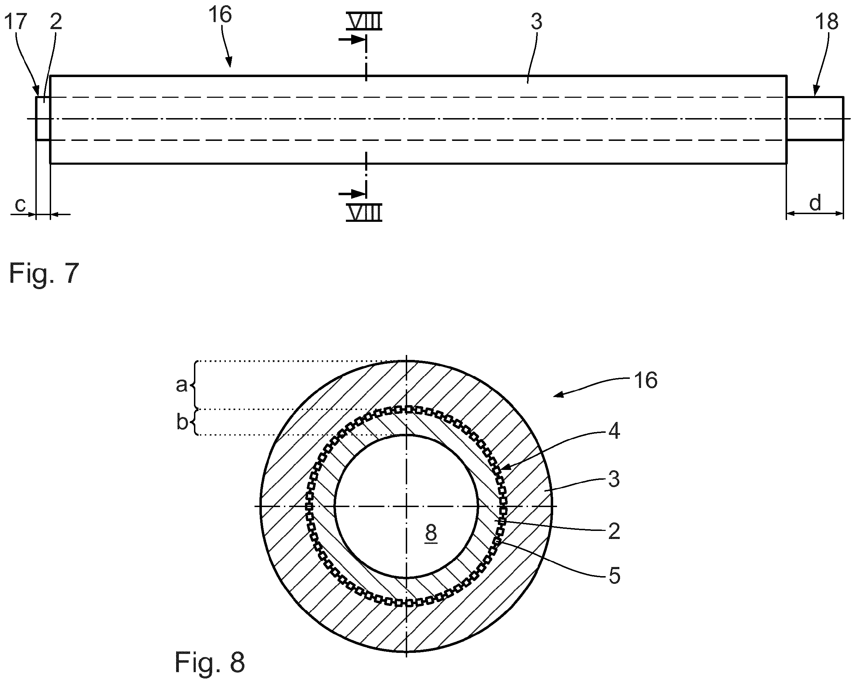

Eine weitere Ausführung eines Mehrkomponenten-Kunststoffkörpers in Form einer Abfüllnadel 16 wird nachfolgend anhand der Fig. 7 bis 11 erläutert. Komponenten und Funktionen, die denjenigen entsprechen, die vorstehend unter Bezugnahme auf die Fig. 1 bis 6 bereits erläutert wurden, tragen die gleichen Bezugsziffern und Bezeichnungen und werden nicht nochmals im Einzelnen diskutiert.

Die Abfüllnadel 16 dient zur Verwendung in einem Schlauchset zum Abfüllen eines fließfähigen Pharmazeutikums. Ein derartiges Schlauchset ist grundsätzlich bekannt aus der WO 2008/103 484 A2.

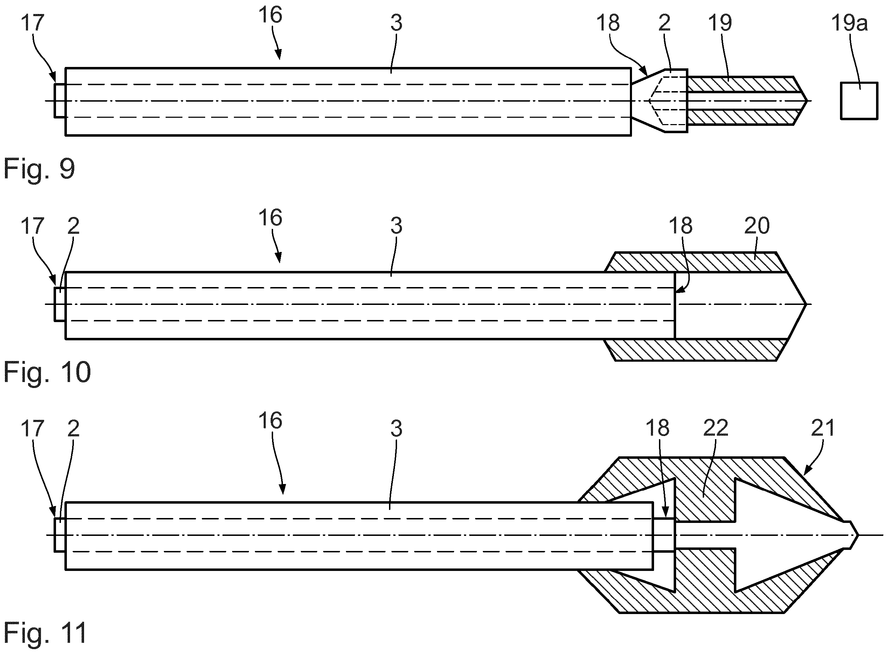

Die Abfüllnadel 16 hat ein in der Fig. 7 linkes Nadelende 17 zum zeitweiligen Einführen in einen Abfüllbehälter. Weiterhin hat die Abfüllnadel 16 ein in der Fig. 7 rechtes, dem Nadelende 17 gegenüberliegendes Konnektorende 18 zum Konnektieren der Abfüllnadel 16 mit einer Fülleinrichtung (vgl. Fig. 9), über die das Pharmazeutikum der Abfüllnadel 16 zuführbar ist. Die Fülleinrichtung ist Teil des Schlauchsets. Weder der Abfüllbehälter noch die Fülleinrichtung sind in der Fig. 7 dargestellt.

Die Abfüllnadel 16 hat eine ein inneres Schlauchlumen 8 vorgebende innere Silikon-Schlauchschicht 2. Vom grundsätzlichen Schichtaufbau her entspricht die Schlauch-Schichtabfolge der Abfüllnadel 16 derjenigen der vorstehend erläuterten Mehrschichtschläuche 7 bzw. 15. Zwischen der inneren Silikon-Schlauchschicht 2 und der äußeren weiteren Polymer-Schlauchschicht 3 liegt wiederum der Haftvermittler 4 mit den Haftvermittlungskörpern 5 vor. Unterschiede zwischen dem Schichtaufbau der Abfüllnadel 16 und denjenigen der Mehrschichtschläuche 7 bzw. 15 ergeben sich wiederum bei den Schichtstärken der beiden Schlauchschichten 2, 3. Eine Schichtstärke a der äußeren, weiteren Polymer-Schlauchschicht 3 ist größer als 0,7 mm. Diese Schichtstärke ist größer oder gleich einer Schichtstärke b der inneren Silikon-Schlauchschicht 2.

Die äußere, weitere Polymer-Schlauchschicht 3 dient als Versteifungs-Schlauchschicht. Die äußere Schlauchschicht 3 kann aus Polypropylen gefertigt sein.

Am Nadelende 17 steht die innere Silikon-Schlauchschicht 2 über die Versteifungs-Schlauchschicht 3 längs eines Überstandes c über. Der Überstand c liegt im Bereich zwischen 1 mm und 5 mm.

Am Konnektorende 18 steht die innere Schlauchschicht 2 über die äußere Versteifungs-Schlauchschicht 3 längs eines Überstandes d über. Der Überstand d kann größer sein als der Überstand c.

Die Fig. 9 bis 11 zeigen verschiedene Ausführungen von Konnektor-Komponenten zum Verbinden der Abfüllnadel 16 mit der Fülleinrichtung des Schlauchsets. Diese Fülleinrichtung ist in der Fig. 9 schematisch bei 19a dargestellt.

Bei der Ausführung nach Fig. 9 ist die Konnektor-Komponente als Füllschlauch 19 ausgebildet, der die Abfüllnadel 16 mit der Fülleinrichtung 19a des Schlauchsets verbindet. Beim Füllschlauch 19 handelt es sich um einen Silikonschlauch. Die innere Silikon-Schlauchschicht 2 der Abfüllnadel 16 ist am Konnektorende 18 auf den Füllschlauch 19 aufgestülpt. Im Bereich des Konnektorendes 18 ist die innere Silikon-Schlauchschicht 2 der Abfüllnadel 16 also aufgeweitet und über einen Außenumfang des Füllschlauchs 19 gelegt, so dass der Füllschlauch 19 am Konnektorende 18 abschnittsweise in die Silikon-Schlauchschicht 2 der Abfüllnadel 16 eingeschoben ist.

Bei der Ausführung nach Fig. 10 ist die Konnektor-Komponente zwischen der Abfüllnadel 16 und der Fülleinrichtung des Schlauchsets ebenfalls als Füllschlauch 20 ausgeführt. Der Füllschlauch 20 hat einen deutlich größeren Innendurchmesser als der Füllschlauch 19 der Ausführung nach Fig. 9. Dieser Innendurchmesser des Füllschlauchs 20 ist so bemessen, dass der Füllschlauch 20 dicht auf die Außenwandung der Abfüllnadel 16 aufgeschoben werden kann. In diesem Fall kann ein Überstand der inneren Silikon-Schlauchschicht 2 der Abfüllnadel 16 über die Versteifungs-Schlauchschicht 3 am Konnektorende 18 entfallen, wie in der Fig. 10 dargestellt.

Bei der Ausführung nach Fig. 11 kommt ein Silikonkonnektor 21 zum Einsatz, wie dieser grundsätzlich aus der DE 10 2011 076 938 A1 bekannt ist.

Alternativ zur Ausführung nach Fig. 10 kann auch die am Konnektorende 18 in einem entsprechend großen Überstandsbereich d freigelegte innere Silikon-Schlauchschicht 2 in einen entsprechend dem Durchmesser angepassten Füllschlauch nach Art des Füllschlauchs 20 eingeschoben werden, was in der Zeichnung nicht dargestellt ist. Ein Innendurchmesser dieser Variante des Füllschlauchs 20 entspricht dann einem Außendurchmesser der inneren Silikon-Schlauchschicht 2.

Die innere Silikon-Schlauchschicht 2 kann bei der Anordnung nach Fig. 11 dichtend mit einem inneren Anschlagselement 22 des Konnektors 21 abschließen, so dass eine fluiddichte Verbindung der inneren Silikon-Schlauchschicht 2 hin zum Konnektor 21 gegeben ist.

Durch entsprechende Ausgestaltungen der Konnektierung, die vorstehend im Zusammenhang mit den Fig. 9 bis 11 beschrieben wurden, kann erreicht werden, dass sämtliche Fluidkanaloberflächen der Schlauchschicht vom Abfüllbehälter bis zum Nadelende 17 aus Silikon bzw. Silikonkautschuk bestehen.

Bei einer nicht dargestellten Ausführung der Abfüllnadel 16 kommt ein chemischer Haftvermittler zum Einsatz. In diesem Fall kann auf Haftvermittlungskörper nach Art der Haftvermittlungskörper 5 auch verzichtet werden. Alternativ ist es möglich, eine Haftvermittlung zwischen den Schlauchschichten 2 und 3 über eine Kombination von Haftvermittlungskörpern nach Art der Haftvermittlungskörper 5 und einer chemischen Haftvermittlungskomponente zu schaffen.

## Patentansprüche

1. Mehrkomponenten-Kunststoffkörper (1; 7; 9; 12; 15; 16)
- mit mindestens einer Silikon-Komponente (2; 14),
- mit mindestens einer weiteren Polymer-Komponente (3; 10; 13) aus einem weiteren unpolaren Polymer, wobei die weitere Polymer-Komponente (3; 10; 13) mindestens ein thermoplastisches Elastomer aufweist,
- mit einem Haftvermittler (4) zwischen der Silikon-Komponente (2; 14) und der weiteren Polymer-Komponente (3; 10; 13),
- wobei der Haftvermittler (4) Haftvermittlungskörper (5) aufweist, die die beiden Komponenten (2, 3; 2, 10; 13, 14) mechanisch miteinander verbinden,
- wobei der Mehrkomponenten-Kunststoffkörper (1; 7; 9; 12; 15) als Mehrschichtschlauch ausgeführt ist, wobei die Silikon-Komponente (2; 14) eine Silikon-Schlauchschicht und die Polymer-Komponente (3; 10; 13) eine Polymer-Schlauchschicht bildet, **dadurch gekennzeichnet, dass**
- die weitere Polymer-Komponente (3; 10; 13) mindestens eines der folgenden Polymere aufweist:
-- Polypropylen,
-- Polyethylen.

2. Mehrkomponenten-Kunststoffkörper nach Anspruch 1, **dadurch gekennzeichnet, dass** der Mehrschichtschlauch als Zweischichtschlauch ausgeführt ist.

3. Verfahren zur Herstellung eines Mehrkomponenten-Kunststoffkörpers (1; 7; 9; 12; 15; 16) nach einem der Ansprüche 1 oder 2 mit folgenden Schritten:
- Herstellen einer Basis-Komponente, bei der es sich um die Silikon-Komponente (2; 14) oder um die weitere Polymer-Komponente (3; 10; 13) handelt,
- Aufbringen des Haftvermittlers (4) auf die Basis-Komponente,
- Aufbringen einer Deck-Komponente, bei der es sich um die weitere Polymer-Komponente (3; 10; 13) oder um die Silikon-Komponente (2; 14) handelt, auf die Basis-Komponente, so dass der Haftvermittler (4) zwischen der Silikon-Komponente (2; 14) und der weiteren Polymer-Komponente (3; 10; 13) zu liegen kommt,
**dadurch gekennzeichnet, dass**
- die weitere Polymer-Komponente (3; 10; 13) mindestens eines der folgenden Polymere aufweist:
-- Polypropylen,
-- Polyethylen.

4. Verfahren nach Anspruch 3, **gekennzeichnet durch** ein Dispergieren von Haftvermittlungskörpern (5) des Haftvermittlers (4) in einem Fluid vor dem Aufbringen des Haftvermittlers (4) auf die Basis-Komponente und durch ein Aufbringen der dispergierten Haftvermittlungskörper (5) auf die hergestellte Basis-Komponente vor dem Aufbringen der Deck-Komponente.

5. Verfahren nach Anspruch 4, **dadurch gekennzeichnet, dass** es sich bei dem Fluid um ein Silikonfluid handelt.

6. Verfahren nach einem der Ansprüche 3 bis 5, **gekennzeichnet durch** ein Silikatisieren einer dem Haftvermittler (4) zugewandten Oberfläche der Basis-Komponente vor dem Aufbringen des Haftvermittlers (4).

7. Verfahren nach einem der Ansprüche 3 bis 6, **gekennzeichnet durch** ein Heizen eines Roh-Mehrkomponenten-Kunststoffkörpers nach dem Aufbringen der Deck-Komponente.

8. Verfahren nach einem der Ansprüche 3 bis 7, **dadurch gekennzeichnet, dass** die Basis-Komponente (2) durch Extrusion hergestellt wird.

9. Verfahren nach einem der Ansprüche 3 bis 8, **dadurch gekennzeichnet, dass** die Deck-Komponente (3; 10) durch Extrusion aufgebracht wird.

## Claims

1. A multi-component plastic body (1; 7; 9; 12; 15; 16)
- having at least one silicone component (2; 14),
- having at least one further polymer component (3; 10; 13) made of a further nonpolar polymer, wherein the further polymer component (3; 10; 13) has at least one thermoplastic elastomer,
- having a bonding agent (4) between the silicone component (2; 14) and the further polymer component (3; 10; 13),
- wherein the bonding agent (4) has bonding bodies (5), which mechanically bond the two components (2, 3; 2, 10; 13, 14),
- wherein the multi-component plastic body (1; 7; 9; 12; 15) is designed as a multi-layered tube, wherein the silicone component (2; 14) forms a silicone tube layer, and the polymer component (3; 10; 13) forms a polymer tube layer,
**characterized in that**
- the further polymer component (3; 10; 13) includes at least one of the following polymers:
-- polypropylene,
-- polyethylene.

2. A multi-component plastic body according to claim 1, **characterized in that** the multi-layered tube is designed as a two-layered tube.

3. A method for the production of a multi-component plastic body (1; 7; 9; 12; 15; 16) according to one of the claims 1 to 2, having the following steps:
- production of a base component, which is either the silicone component (2; 14) or the further polymer component (3; 10; 13),
- application of the bonding agent (4) to the base component,
- application of a cover component, which is either the further polymer component (3; 10; 13) or the silicone component (2; 14), to the base component, such that the bonding agent (4) comes to lie between the silicone component (2; 14) and the further polymer component (3; 10; 13),
**characterized in that**
- the further polymer component (3; 10; 13) includes at least one of the following polymers:
-- polypropylene,
-- polyethylene.

4. A method according to claim 3, **characterized by** a dispersion of bonding bodies (5) of the bonding agent (4) in a liquid prior to application of the bonding agent (4) to the base component, and by application of the dispersed bonding bodies (5) onto the produced base component prior to the application of the cover component.

5. A method according to claim 4, **characterized in that** the liquid is a silicone liquid.

6. A method according to one of the claims 3 to 5, **characterized by** a silication of a surface of the base component facing toward the bonding agent (4) prior to the application of the bonding agent (4).

7. A method according to one of the claims 3 to 6, **characterized by** a heating of the raw multi-component plastic body after application of the cover component.

8. A method according to one of the claims 3 to 7, **characterized in that** the base component (2) is produced through extrusion.

9. A method according to one of the claims 3 to 8, **characterized in that** the cover component (3; 10) is applied through extrusion.

## Revendications

1. Corps en matière plastique multi-composants (1 ; 7 ; 9 ; 12 ; 15 ; 16)
- avec au moins un composant silicone (2 ; 14),
- avec au moins un autre composant polymère (3 ; 10 ; 13) constitué d'un autre polymère non polaire, l'autre composant polymère (3 ; 10 ; 13) présentant au moins un élastomère thermoplastique,
- avec un agent adhésif (4) entre le composant silicone (2 ; 14) et l'autre composant polymère (3 ; 10 ; 13),
- dans lequel l'agent adhésif (4) présente des corps d'agent adhésif (5) qui relient mécaniquement les deux composants (2, 3 ; 2, 10 ; 13, 14),
- dans lequel le corps en matière plastique multi-composants (1 ; 7 ; 9 ; 12 ; 15) est réalisé sous forme de tuyau multicouche, le composant silicone (2 ; 14) formant une couche de tuyau en silicone et le composant polymère (3 ; 10 ; 13) formant une couche de tuyau en polymère,
**caractérisé en ce que**
- ledit autre composant polymère (3 ; 10 ; 13) présente au moins l'un des polymères suivants :
-- polypropylène,
-- polyéthylène.

2. Corps en matière plastique multi-composants selon la revendication 1, **caractérisé en ce que** le tuyau multicouche est réalisé sous forme de tuyau à deux couches.

3. Procédé de fabrication d'un corps en matière plastique multi-composants (1 ; 7 ; 9 ; 12 ; 15 ; 16) selon l'une quelconque des revendications 1 ou 2, comprenant les étapes suivantes :
- production d'un composant de base qui est le composant silicone (2 ; 14) ou l'autre composant polymère (3 ; 10 ; 13),
- application de l'agent adhésif (4) sur le composant de base,
- application d'un composant de couverture, qui est l'autre composant polymère (3 ; 10 ; 13) ou le composant silicone (2 ; 14), sur le composant de base, de sorte que l'agent adhésif (4) vient se placer entre le composant silicone (2 ; 14) et l'autre composant polymère (3 ; 10 ; 13),
**caractérisé en ce que**
- ledit autre composant polymère (3 ; 10 ; 13) présente au moins l'un des polymères suivants :
-- polypropylène,
-- polyéthylène.

4. Procédé selon la revendication 3, **caractérisé par** une dispersion de corps d'agent adhésif (5) de l'agent adhésif (4) dans un fluide avant l'application de l'agent adhésif (4) sur le composant de base et par une application des corps d'agent adhésif dispersés (5) sur le composant de base préparé avant l'application du composant de couverture.

5. Procédé selon la revendication 4, **caractérisé en ce que** le fluide est un fluide silicone.

6. Procédé selon l'une quelconque des revendications 3 à 5, **caractérisé par** une silicatisation d'une surface du composant de base tournée vers l'agent adhésif (4) avant l'application de l'agent adhésif (4).

7. Procédé selon l'une quelconque des revendications 3 à 6, **caractérisé par** un chauffage d'un corps en matière plastique brut multi-composants après l'application du composant de couverture.

8. Procédé selon l'une quelconque des revendications 3 à 7, **caractérisé en ce que** le composant de base (2) est fabriqué par extrusion.

9. Procédé selon l'une quelconque des revendications 3 à 8, **caractérisé en ce que** le composant de couverture (3 ; 10) est appliqué par extrusion.
